# EUROPÄISCHE PATENTANMELDUNG

(11) **EP 0 805 069 A1**
(43) Veröffentlichungstag der Anmeldung: **05.11.1997**
(21) Anmeldenummer: 97107337.4
(22) Anmeldetag: 03.05.1997
(51) Int. Cl.: B60R 19/56, B60P 1/44

(54) **Befestigungsvorrichtung für eine Hubladebühne**

(30) Priorität: 04.05.1996 DE 19617996
(71) Anmelder: Gerd Bär GmbH, 74078 Heilbronn (DE)
(72) Erfinder: Bär, Gerd, 74078 Heilbronn (DE)
(74) Vertreter: KOHLER SCHMID + PARTNER

(57) **Zusammenfassung**

Bei einer Vorrichtung zur Befestigung eines eine Hubladebühne oder dgl. tragenden Tragprofils (2) an einem Fahrgestellrahmen (1) im hinteren Bereich eines Fahrzeuges, wobei das Tragprofil (2) mindestens zwei Lagerstellen (3,4,10) für die Hubladebühne trägt und an dem Fahrgestellrahmen (1) gehalten ist, sind mindestens zwei am Tragprofil (2) befestigte und nach hinten stehende Unterfahrschutzträger (8) als tragende Bauteile ausgebildet und am Fahrgestellrahmen gehalten. Für jeden Unterfahrschutzträger (8) ist mindestens ein Verbindungsarm (10) vorgesehen, der einerseits am Tragprofil (2) nahe den Lagerstellen (3,4,10) für die Hubladebühne und andererseits am Träger (8) kraftschlüssig befestigt ist. Die über die Lagerstellen auf das Tragprofil wirkenden Kräfte der Hubladebühne werden nicht allein vom Tragprofil, sondern zusätzlich auch über die Unterfahrschutzträger und die Verbindungsarme in den Fahrgestellrahmen abgeleitet, was die Torsion im Tragprofil minimiert.

## Beschreibung

Die vorliegende Erfindung betrifft eine Vorrichtung zur Befestigung eines eine Hubladebühne oder dgl. tragenden Tragprofils an einem Fahrgestellrahmen im hinteren Bereich eines Fahrzeuges, wobei das Tragprofil mindestens zwei Lagerstellen für die Hubladebühne trägt und an dem Fahrgestellrahmen gehalten ist.

Eine derartige Befestigungsvorrichtung ist beispielsweise durch die P 33 02 681 bekanntgeworden.

Bei einer herkömmlichen klassischen Befestigung wird das Tragprofil der Hubladebühne mittels einer Aufhängeplatte, mit dem Fahrgestellrahmen und eventuell mit einem auf diesem aufliegenden Montagerahmen des Fahrzeugs verbunden. Dabei wird die Aufhängeplatte als loses Teil über das Tragprofil gestülpt und an der Verbindungsstelle provisorisch befestigt. Danach wird die Aufhängeplatte mit dem Fahrgestellrahmen und dem Hilfsrahmen verbohrt und verschraubt. Zuletzt wird eine tragende Schweißnaht um das Tragprofil an der Aufhängeplatte ausgeführt. Diese Technik ist notwendig, um die Befestigung des Tragprofils am Fahrgestellrahmen verschiedenen Fahrgestellbreiten anpassen zu können.

Dieses Befestigungsgrundprinzip - Kräfteeinleitung über das Tragprofil - erfordert schwere Bauteile, da das Tragprofil sonst unter der Belastung tordieren würde. Je kleiner das Tragprofil, desto größer sind die angreifenden Kräfte. Aufgrund des immer geringer werdenden Platzes durch niedrig gebaute Fahrzeuge kann das Tragprofil aber nicht beliebig groß ausgeführt werden, da andernfalls keine ausreichende Bodenfreiheit sichergestellt ist.

Die geschilderte klassische Aufhängung hat den Nachteil, daß bei der Montage geschweißt werden muß, was nur von geprüften Schweißern durchgeführt werden darf. Die Schweißarbeiten verbieten auch die vorherige Fertiglackierung der Hubladebühne, oder aber es sind kostenintensive Nacharbeiten bei schlechter Qualität erforderlich. Die Aufhängeplatte kann auch nicht vorher an dem Tragprofil angebracht werden, da sonst aufgrund verschiedener Fahrgestellbreiten ein universeller Einsatz nicht möglich ist. Die Fahrgestellbreiten variieren von 700-920 mm, wobei es in bestimmten Tragfähigkeitsklassen sogenannte Breitengruppen mit Differenzmaßen von nur ca. 20 mm gibt.

Um diesen mit Schweißverbindungen verbundenen Nachteilen abzuhelfen, ist aus der P 41 14 705 eine Aufhängung mittels Schraubverbindung bekannt. Diese Aufhängung ist für alle Fahrgestellbreiten einsetzbar, ist aber teuer und schwer.

Bei der aus der P 33 02 681 bekannten Befestigungsvorrichtung wird die Befestigung am Fahrgestellrahmen mittels Zug- und Druckplatten vorgenommen. So können die auftretenden Kräfte wesentlich besser aufgenommen werden. Diese Lösung ist allerdings kostenaufwendig, wenn sie universell für alle Fahrgestellbreiten eingesetzt werden soll. Außerdem ist diese Befestigungsart nur für Tragprofile kleiner Dimensionen, beispielsweise 100 x 100 mm² geeignet. Sehr vorteilhaft wäre aber z. B. ein größeres Tragprofil, in dem ein Hydraulikaggregat vollständig untergebracht werden könnte.

Aufgabe der vorliegenden Erfindung ist es daher, eine Befestigungsvorrichtung der eingangs genannten Art dahingehend weiterzubilden, daß die am Tragprofil auftretenden Kräfte besser auf Rahmenkonstruktionen im Fahrgestellbereich übertragen werden können.

Diese Aufgabe wird erfindungsgemäß in einem ersten Aspekt dadurch gelöst, daß mindestens zwei am Tragprofil befestigte und nach hinten stehende Unterfahrschutzträger als tragende Bauteile ausgebildet und am Fahrgestellrahmen gehalten sind und daß für jeden Unterfahrschutzträger mindestens ein Verbindungsarm vorgesehen ist, der einerseits am Tragprofil nahe den Lagerstellen für die Hubladebühne und andererseits mit dem Träger kraftschlüssig befestigt ist.

Der besondere Vorteil dieser Konstruktion besteht darin, daß die am Tragprofil auftretenden Kräfte dort abgeleitet werden, wo sie entstehen. Die über die Lagerstellen auf das Tragprofil wirkenden Kräfte der Hubladebühne werden nicht allein vom Tragprofil, sondern zusätzlich auch über die Unterfahrschutzträger und die Verbindungsarme in den Fahrgestellrahmen abgeleitet, was die Torsion im Tragprofil minimiert. Dies erlaubt Tragprofile mit geringerer Wandstärke, so daß sich das Gesamtgewicht der Hubladebühne reduziert.

Die Zugkräfte werden jetzt durch die Befestigung des Tragprofils an den Trägern einerseits und die lagerstellennahe Ausbildung der Verbindungsarme andererseits in die Unterfahrschutzträger eingeleitet. Wären die Verbindungsarme ohne Verbindung zum Unterfahrschutzträger, so müßte die gesamte Torsions- und Biegebelastung durch das Tragprofil in die Unterfahrschutzträger eingeleitet werden. Das Tragprofil wird entlastet, so daß es um 20% dünner als bei der herkömmlichen Befestigungsweise ausgeführt werden kann.

Über die tragenden Unterfahrschutzträger ist das Tragprofil am Fahrgestellrahmen befestigt. Ein Unterfahrschutz für eine Hubladebühne ist nach einer EG/EU-Vorschrift zwingend vorgeschrieben. Die zur Befestigung des Unterfahrschutzes ohnehin erforderlichen Unterfahrschutzträger können somit vorteilhaft auch zur Aufnahme der an der Hubladebühne auftretenden Kräfte genutzt werden.

Die Verbindungsarme nehmen die am Tragprofil wirkenden Kräfte auf und leiten sie in die Unterfahrschutzträger ab, wo entsprechend der Länge der Verbindungsarme der Hebelarm vergrößert ist und damit die aufzunehmenden Kräfte verringert werden. Die bei dieser Befestigungsvorrichtung auftretenden Druckkräfte werden vom Tragprofil, die auftretenden Zugkräfte vom Unterfahrschutzträger aufgenommen.

Durch die erfindungsgemäße Befestigungsvorrichtung kann die Hubladebühne industriell im Tauchverfahren beschichtet werden und muß nach der Montage nicht lackiert werden, so daß sich Kosteneinsparungen sowohl bezüglich der Herstellungskosten als auch in den Montagekosten ergeben. Die Montage ist einfach und leicht durchzuführen. An das Montagepersonal sind keine allzu hohen Anforderungen zu stellen, da nicht geschweißt werden muß.

Eine ganz besonders bevorzugte Ausführungsform der erfindungsgemäßen Befestigungsvorrichtung kennzeichnet sich dadurch, daß jeder Träger als Versteifungsprofil, vorzugsweise als ein Z-Profil ausgebildet ist. Ein derartig profilierter Träger weist eine ausreichende Steifigkeit auf, um das Tragprofil zu halten und die angreifenden Kräfte weiterzuleiten. Ein Z-Profil ist besonders geeignet, da es ein sehr gutes Versteifungs-/Gewichtsverhältnis aufweist und seine beiden äußeren Schenkel als Befestigungsflansche genutzt werden können. Zweckmäßigerweise entspricht die Höhe des Z-Profils der Höhe des Tragprofils, wodurch die am Tragprofil auftretenden Kräfte optimal auf das Z-Profil übertragen werden.

Bei einer vorteilhaften Ausführungsform erstreckt sich jeder Verbindungsarm vom Tragprofil zunächst parallel zum Träger und ist dann zum Träger hin abgewinkelt. Gegebenenfalls ist in dem Verbindungsarm eine entsprechend abgewinkelte, nach unten offene Aussparung vorzusehen, um die Bewegung von Hubzylindern der Hubladebühne nicht einzuschränken.

Bei einer besonders vorteilhaften Ausführungsform weist jeder Träger einen oberen Flansch auf, der an einem i.w. waagerechten unteren Flansch des Fahrgestellrahmens anliegt. Durch die beiden Flansche ist eine optimale Anbindung der an den Trägern auftretenden Kräfte auf den Fahrgestellrahmen hinsichtlich der Biegebeanspruchung sichergestellt. Der Fahrgestellrahmen eines Fahrzeuges ist meist U-förmig, wobei die äußeren Schenkel parallel zum Boden, also i.w. waagerecht verlaufen.

Eine Weiterbildung dieser Ausführungsform kennzeichnet sich dadurch, daß der obere Flansch des Trägers über das Tragprofil 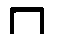 -förmig übersteht und mit seinem einen Schenkel auf dem Tragprofil aufsteht und daß der 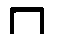 -förmig überstehende Träger an das Tragprofil angeschweißt ist. Durch diese 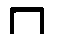 -förmige Ausbildung des Trägers wird das Tragprofil torsionsverssteift, so daß es nicht an einem Rahmen, z.B. dem Fahrgestellrahmen anzuliegen braucht.

Bei einer anderen Weiterbildung ist jeweils eine Halteplatte mit der i.w. senkrechten Außenseite des Fahrgestellrahmens und mit der i.w. senkrechten Außenseite des Trägers i.w. waagerecht verschraubt. Die Halteplatte liegt zumindest teilweise am Fahrgestellrahmen an, wodurch eine schubfeste Verbindung des Montagerahmens am Fahrgestellrahmen sichergestellt ist.

Mit dieser Befestigungsart kann auch eine Differenz der Breiten des Fahrgestellrahmens und des Trägers von bis zu 30 mm ausgeglichen werden. Da die Halteplatten nur auf Zug beansprucht werden, brauchen sie nur eine geringe Stärke, z.B. 4 mm, aufweisen. Die aus Flachmaterial gebildete Halteplatte läßt sich daher leicht verbiegen und zieht sich ohne weiteres an den Fahrgestellrahmen an. Hierbei ist die Befestigung so gewählt, daß die Halteplatten gleichzeitig die schubfeste Verbindung zum Montagerahmen herstellen, wie es von Fahrgestellherstellern, insbesondere bei Pritschenaufbauten, vorgeschrieben ist. Ein weiterer Vorteil dieser Befestigungsart liegt darin, daß die Bohr- und Schraubarbeiten in horizontaler Lage einfacher ausgeführt werden können.

Bei einer weiteren bevorzugten Ausführungsform ist der Träger an einem Fahrgestellrahmen mit Doppelhutprofil über einen Befestigungswinkel befestigt. Derartige Doppelhutprofile werden insbesondere bei Kleinlastern verwendet.

Eine ganz besonders bevorzugte Ausführungsform kennzeichnet sich dadurch, daß das Tragprofil im Bereich der Lagerstellen torsionsversteift ist und daß das Tragprofil und jeder Träger beabstandet zum Fahrgestellrahmen an diesem befestigt sind. Die Maßnahme der Torsionsversteifung verhindert das sonst auftretende rhombische Verschieben des Tragprofils. Dadurch ist eine Anlage des Tragprofils am einem Rahmen wie z.B. am Fahrgestellrahmen nicht mehr zwingend erforderlich.

Bei einer ganz besonders vorteilhaften Weiterbildung dieser Ausführungsform ist das Tragprofil als zum Träger hin offenes, erstes U-förmiges Profil gebildet, das außen seitlich der beiden i.w. senkrechten Stege der Träger durch jeweils ein zweites U-förmiges Profil zu einem geschlossenen Profil ergänzt ist, und erstreckt sich der Steg des Trägers formschlüssig in das erste U-förmige Profil bis an dessen i.w. senkrechte Innenfläche und ist an das erste U-Profil und das zweite U-Profil angeschweißt. Der Steg des Trägers bildet eine versteifende Zwischenwand im ersten Profil aus, wodurch das Tragprofil im Bereich der Kraftaufnahme torsionsversteift ist.

Bei einer weiteren vorteilhaften Ausgestaltung ist jeweils eine Halteplatte mit der i.w. senkrechten Außenseite des Fahrgestellrahmens und mit der i.w. senkrechten Außenseite des Trägers i.w. waagerecht verschraubt. Das Tragprofil kann über die Halteplatte vom Fahrgestellrahmen beabstandet sein, wobei auch eine Kombination von Halteplatte und Zwischenrahmen zur Befestigung der Träger und des Tragprofils möglich ist.

Eine weitere vorteilhafte Ausführungsform kennzeichnet sich dadurch, daß die am Fahrgestellrahmen, an einem Zwischenrahmen oder an der Kalteplatte anliegende Fläche des Tragprofiles durch Anschlagklötze vergrößert ist, so daß am Tragprofil angreifende Kräfte bzw. Drehmomente besser und gezielt z.B in den U-förmigen Fahrgestellrahmen eingeleitet werden.

Bei einer weiteren bevorzugten Ausführungsform ist das beabstandet zum Fahrgestellrahmen gehaltene Tragrohr auf der den Trägern abgewandten Seite über mindestens ein Winkelelement am Fahrgestellrahmen befestigt.

Weitere Vorteile und Merkmale der Erfindung ergeben sich aus der beigefügten Beschreibung und Zeichnung. Die dort beschriebenen Merkmale können jeweils einzeln für sich oder in beliebigen Kombinationen miteinander verwendet werden. In der Zeichnung sind bevorzugte Ausführungsformen der erfindungsgemäßen Befestigungsvorrichtung dargestellt. Die gezeigten Ausführungsformen sind nicht als abschließende Aufzählung, sondern lediglich beispielhaft zu verstehen.

Es zeigt:
- Fig. 1: eine erste Ausführungsform einer Befestigüngsvorrichtung für eine Hubladebühne eines Lkw's mit einem Tragprofil und einem Unterfahrschutz;
- Fig. 2: eine Ansicht der Befestigungsvorrichtung der Fig. 1 in Richtung II in Fig. 1;
- Fig. 3: eine Schnittansicht gemäß der Schnittlinie III-III in Fig. 2;
- Fig. 4: eine Seitenansicht in Richtung IV der Fig. 1;
- Fig. 5: eine Befestigungsart zwischen den Unterfahrschutzträgern und dem Fahrgestellrahmen, wobei der Fahrgestellrahmen breiter als der Abstand zwischen den beiden Unterfahrschutzträgern ist und das Tragprofil ausgelassen ist;
- Fig. 6: die Befestigungsart gemäß Fig. 5, wobei der Fahrgestellrahmen kleiner als der Abstand zwischen den beiden Unterfahrschutzträgern ist;
- Fig. 7: eine Befestigungsart zwischen Fahrgestellrahmen und Fahrgestellrahmen mittels eines zusätzlichen Winkelelements;
- Fig. 8: eine Zweite Ausführungsform einer Befestigungsvorrichtung zwischen den Unterfahrschutzträgern und einem Fahrgestellrahmen mit Doppelhutprofil, wobei das Tragprofil ausgelassen ist;
- Fig. 9: in einer der Fig. 7 entsprechenden Seitenansicht die Befestigungsart der Fig. 8;
- Fig. 10: in einer der Fig. 1 entsprechenden Ansicht eine dritte Ausführungsform einer Befestigüngsvorrichtung, bei der das Tragprofil durch die Unterfahrschutzträger torsionsversteift ist.
- Fig. 11: eine Schnittansicht der Befestigungsvorrichtung der Fig. 10 gemäß der Schnittlinie XI-XI in Fig. 10;
- Fig. 12: eine weitere Befestigungsart zwischen Fahrgestellrahmen und beabstandetem Fahrgestellrahmen mittels zweier Winkelelemente; und
- Fig. 13: in einer der Fig. 2 entsprechenden Ansicht eine vierte Ausführungsform einer Befestigungsvorrichtung, bei der der Unterfahrschutzträger über das Tragprofil übersteht und am Fahrgestellrahmen beabstandet gehalten ist.

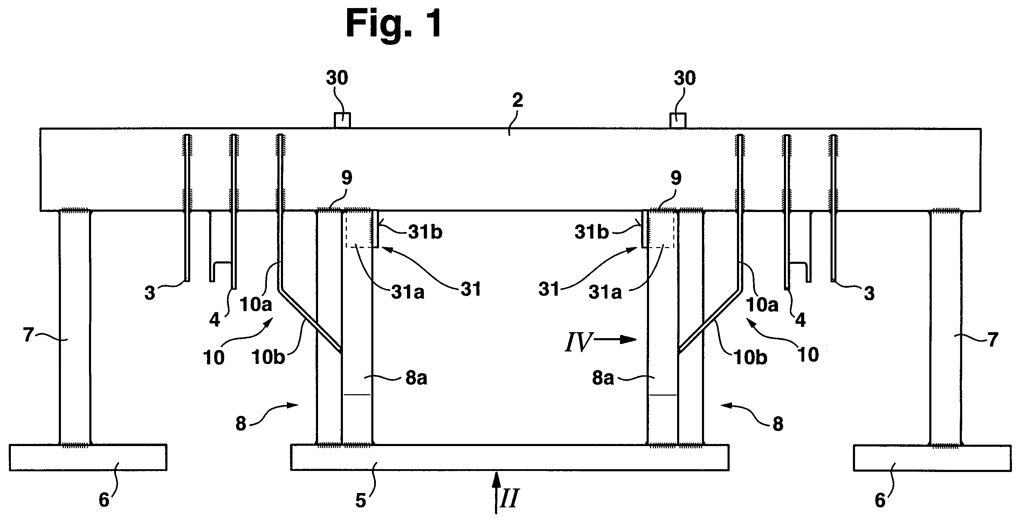

In den Fign. 1 bis 4 ist eine erste Ausführungsform einer Befestigungsvorrichtung für eine Hubladebühne eines LKW's an einem U-förmigen Fahrgestellrahmen 1 des Lkw's gezeigt.

Mit dem Bezugszeichen 2 ist ein Tragprofil bezeichnet, das an dem Fahrgestellrahmen 1 gehalten ist und an dem jeweils seitlich Lagerarme 3, 4, 10a zur nicht näher dargestellten Lagerung der Hubladebühne (nicht gezeigt) befestigt sind.

Von dem Tragprofil 2 erstreckt sich in waagerechter Richtung nach hinten ein Unterfahrschutz, der durch ein mittleres Unterfahrschutzblech 5 und zwei, jeweils seitlich dazu angeordnete Unterfahrschutzbleche 6 gebildet ist. Die seitlichen Unterfahrschutzbleche 6 sind über seitliche Unterfahrschutzträger 7 an dem Tragprofil 2 angeschweißt. Die seitlichen Unterfahrschutzträger 7 dienen nur zur Halterung der seitlichen Unterfahrschutzbleche 6 und eventuell dort angeordneter Rückleuchten, so daß sie nicht als tragende Bauteile ausgebildet sind.

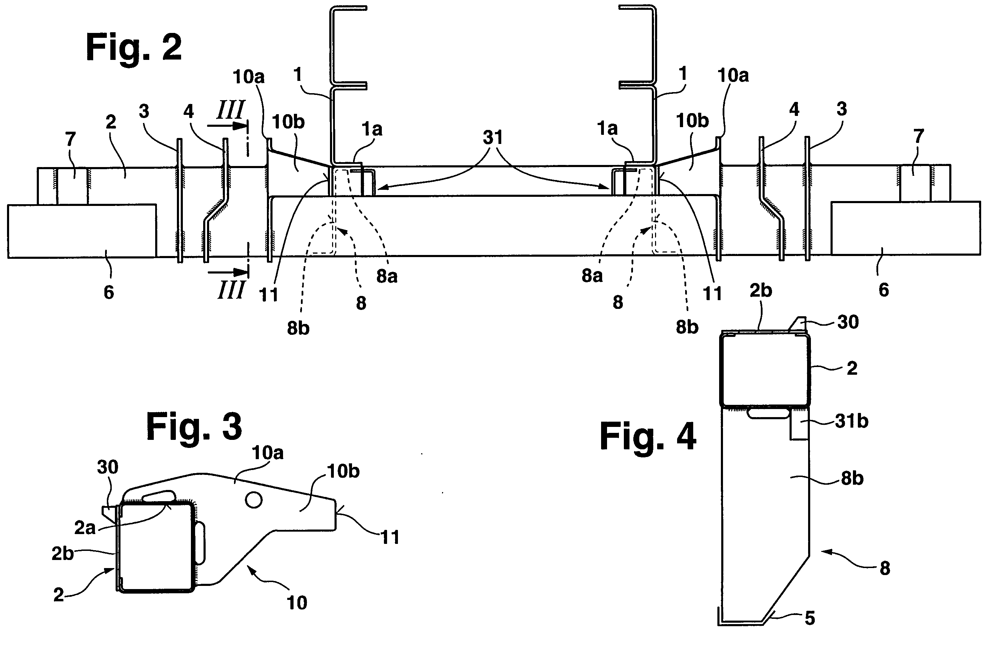

Der mittlere Unterfahrschutz 5 ist über zwei Unterfahrschutzträger 8 mit Z-förmigem Querschnitt an dem Tragprofil 2 über eine Schweißverbindung 9 befestigt. Aufgrund des Z-Profils sind die Unterfahrschutzträger 8 tragende Bauteile. Wie Fig. 2 zeigt, liegt der obere waagerechte Schenkel 8a des Z-förmigen Trägers 8 an einem unteren waagerechten Flansch 1a des Fahrgestellrahmens 1 an und ist, wie unten genauer beschrieben wird, auf verschiedene Arten an diesem befestigt.

Am Tragprofil 2 ist jeweils seitlich und nahe den Z-förmigen Trägern 8 ein Verbindungsarm 10 (Fig. 3) angeschweißt, der sich zunächst auf einem ersten Abschnitt 10a parallel zum Z-förmigen Träger 8 erstreckt und dann auf einem zweiten Abschnitt 10b zu diesem hin abknickt. Der erste Abschnitt 10a des Verbindungsarms 10 dient auch als Lagerstelle für die Hubladebühne. Das äußere Ende 11 des abgewinkelten zweiten Abschnitts 10b ist über eine Schweißverbindung (nicht gezeigt) kraftschlüssig mit dem senkrechten Steg 8b des Trägers 8 verbunden. Wie Fig. 3 weiter zeigt, liegt der Verbindungsarm 10 über eine rechtwinklige Winkelfläche an dem Tragprofil 2 an und ist entlang dieser Fläche mit diesem verschweißt. Das Tragprofil 2 ist durch ein offenes C-Profil 2a und einem Deckelblech 2b gebildet, die über die gesamte Länge des Tragprofils 2 miteinander zu einem geschlossenen rechtwinkligen Tragprofil 2 verschweißt sind.

Fig. 4 zeigt das Tragprofil 2 und den Träger 8, dessen eine Stirnseite über seinen gesamten Querschnitt am Tragprofil 2 angeschweißt ist und dessen andere Stirnseite das mittelere Unterfahrschutzblech 5 trägt. Die senkrechte Höhe des Trägers 8, d.h. die Höhe der Stege 8b, entspricht der senkrechten Höhe des Tragprofils.

Die auf das Tragprofil 2 aufgrund der Hubladebühne wirkenden Kräfte werden einerseits direkt über die Schweißverbindung 9 in die Träger 8 und andererseits indirekt über die Verbindungsarme 10 in die Träger 8 eingeleitet. Die Träger 8 ihrererseits leiten diese Kräfte über ihre oberen Schenkel 8a auf den Fahrgestellrahmen 1 weiter. Wie Fig. 2 zeigt, liegt das Tragprofil 2 mit seiner Oberseite an den Flanschen 1a des Fahrgestellrahmens 1 an, so daß am Tragprofil 2 auftretende Druckkräfte direkt in den Fahrgestellrahmen 1 eingeleitet werden.

Die Anlagefläche des Tragprofils 2 an dem Flansch 1a des Fahrgestellrahmens 1 ist durch zwei Anschlagklötze 30 vergrößert. Die beiden Anschlagklötze 30 sind auf der den Z-förmigen Trägern 8 gegenüberliegenden senkrechten Seitenwand des Tragprofils 2 befestigt und so angeordnet, daß sie gezielt auf den tragenden Teil des Fahrgestellrahmens 1, d.h. in der senkrechten Seitenwand des U-förmigen Fahrgestellrahmens, wirken.

Befestigungswinkel 31 unterstützen die Verbindung zwischen dem Z-förmigem Träger 8 und dem Tragprofil 2. Die beiden Schenkel 31a, 31b des Befestigungswinkels 31 sind stirnseitig mit dem Tragprofil 2 verschweißt , wobei der waagerechte Schenkel 31a eine Verstärkung für den oberen Flansch 8a des Trägers 8 bildet.

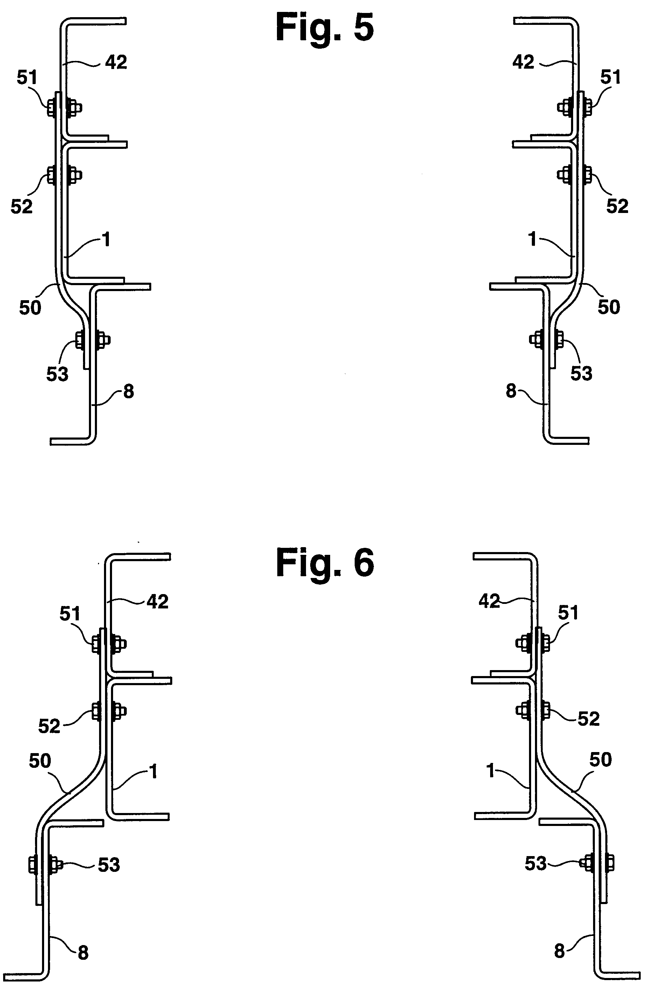

Bei der Befestigung nach den Fign. 5 und 6 sind der Z-förmige Träger 8 und der Montagerahmen 42 über eine Halteplatte 50 am Fahrgestellrahmen 1 über waagerechte Schraubverbindungen 51, 52, 53 befestigt. Da die Halteplatten 50 hauptsächlich auf Zug beansprucht werden, ist ihre Wandstärke noch derart, daß sie sich verbiegen lassen. Daher können die Halteplatten 50 ohne weiteres an einen gegenüber den Trägern 8 zurückstehenden (Fig. 5) oder an einen vorstehenden (Fig. 6) Fahrgestellrahmen 1 angepaßt werden.

Auf diese Weise kann eine Differenz von bis zu ca. 30 mm zwischen dem Träger 8 und dem Fahrgestellrahmen 1 ausgeglichen werden. Bei größeren Abständen müssen die Halteplatten gekantet werden. Die Halteplatte 50 stellt außerdem eine schubfeste Verbindung zwischen dem Montagerahmen 42 und dem Fahrgestellrahmen 1 sicher, was der Fahrgestellhersteller, insbesondere bei Pritschenaufbauten, vorschreibt. Die Bohrungen für die Schraubverbindungen 51, 52 im Fahrgestellrahmen 12 und im Montagerahmen 42 können bequem in horizontaler Lage ausgeführt werden.

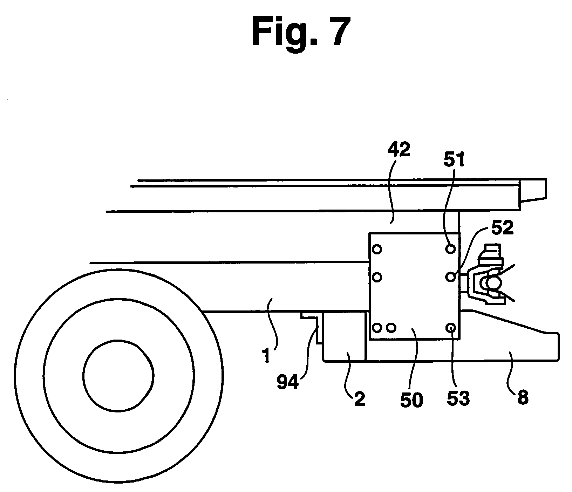

Fig. 7 zeigt die Seitenansicht einer zusätlichen Schraub- oder Schweißbefestigung des in Anlage am Fahrgestellrahmen 1 gehaltenen Tragprofils 2 auf der dem Träger 8 abgewandten Seite über ein L-förmiges Winkelelement 94.

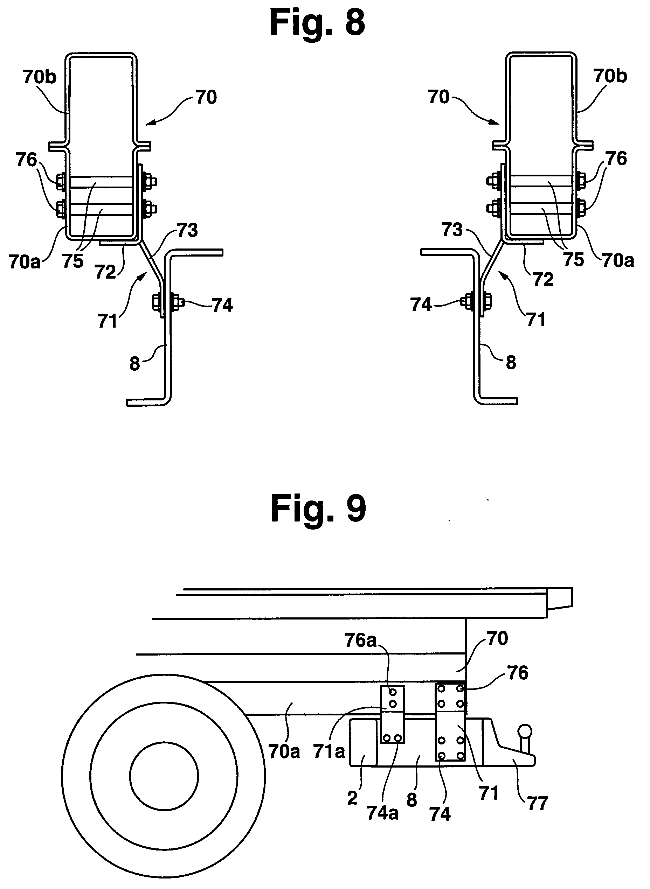

Die Fign. 8 und 9 zeigen, wie der Träger 8 mit einem als Doppelhutprofil 70a, 70b ausgebildeten Fahrzeugrahmen 70 mittels eines Befestigungswinkels 71 verbunden werden kann. Das untere Hutprofil 70a liegt auf einem rechteckigen Auflagewinkel 72 des Befestigungswinkels 71 auf. Dieser Auflagewinkel 72 ist nach unten durch eine Befestigungslasche 73 in Richtung des Z-förmigen Trägers 8 verlängert und mit diesem über eine Schraubverbindung 74 verbunden. Damit das untere Doppelhutprofil 70a nicht aufgrund der auftretenden Kräfte zusammen- oder auseinandergedrückt wird, sind innerhalb des Profils 70a zwei Abstandshalter in Form von Distanzhülsen 75 angeordnet, die über eine Schraubverbindung 76 gehalten sind. Auf der Zugseite können bereits werksmäßig vorhandene, vernietete Distanzhülsen genutzt werden. Dagegen werden auf der Druckseite Bohrungen mit einem dem Außendurchmesser der Distanzhülsen entsprechenden Durchmesser in das untere Hutprofil 70a gebohrt und in diese Bohrungen die Distanzhülsen eingeführt.

Fig. 9 zeigt in einer Seitenansicht die Befestigung des Trägers 8 nach Fig. 8 mittels zweier Befestigungswinkel 71, 71a. Der Befestigungswinkel 71 ist auf der Zugseite mittels zwei oder vier Schrauben 74 am Träger 8 und mittels vier rechteckförmig angeordneter Schrauben 76 am unteren Hutprofil 70a befestigt. Der Befestigungswinkel 71a auf der Druckseite ist mittels zweier waagerecht versetzter Schrauben 74a am Träger 8 und mittels zweier senkrecht versetzter Schrauben 76a am unteren Hutprofil 70a befestigt.

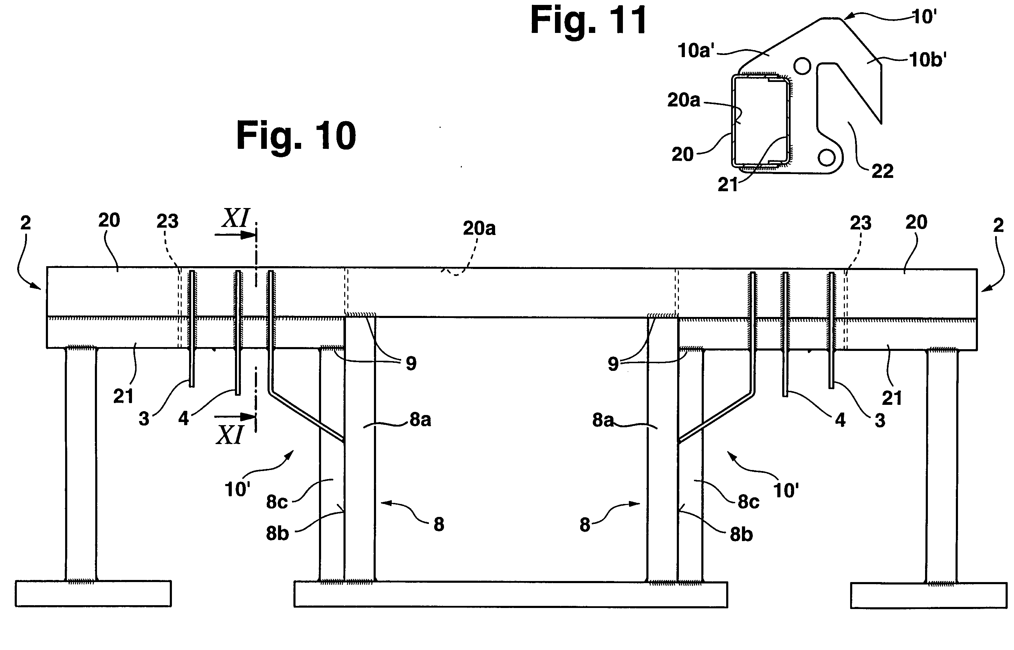

Während in der Ausführungsform nach den Fign. 1 bis 4 das Tragprofil 2 durch ein C-Profil 2a und ein Deckelblech 2b über die gesamte Länge des Tragprofils 2 gebildet ist, wird bei der in den Fign. 10 und 11 gezeigten Ausführungsform das Tragprofil 2 über seine gesamte Länge durch ein erstes U-Profil 20 gebildet. Nur im jeweiligen Verbindungsbereich der Lagerarme 3, 4, 10' ist das erste U-Profil 20 durch ein zweites U-Profil 21 zu einem geschlossenen Profil verschweißt. Bei dieser Ausführungsform kann im Gegensatz zu der nach den Fign. 1 - 4 das Antriebsaggregat nicht im Tragprofil genommen werden.

Der senkrechte Steg 8b des Z-förmigen Trägers 8 erstreckt sich bei dieser Ausführungsform formschlüssig bis an die Innenwand 20a des ersten U-Profils 20 hinein und ist mit dem ersten und zweiten U-Profil 21 verschweißt. Zusammen mit den weiteren Schottblechen 23 wird das Tragprofil 2 im Bereich der Lagerarme 3, 4, 10' torsionsversteift, so daß die in der Ausführungsform nach den Fign. 1 bis 4 zwingend erforderliche Anlage des Tragprofils 2 am Fahrgestellrahmen 1 entfallen kann. Der obere Schenkel 8a des Trägers 8 ist an dem ersten U-Profil 20 und der untere Schenkel 8c an dem zweiten U-Profil 21 angeschweißt ist.

Fig. 11 zeigt auch, daß das Tragprofil 2 bei dieser Ausführungsform in einer kraft- und formschlüssigen, U-förmigen Aufnahme des Verbindungsarmes 10' aufgenommen ist. Die beiden U-Profile 20, 21 sind sowohl miteinander als auch mit dem Verbindungsarm 10' verschweißt. Der vordere Teil 10a' des Verbindungsarms 10' ist soweit hochgezogen, daß zwischen den beiden Abschnitten 10a', 10b' des Verbindungsarms 10' ein offener Raum 22 ausgebildet ist. Dies ermöglicht es, daß sich Hubzylinder o.ä. der Hubladebühne bis in den offenen Raum 22 hochbewegen können.

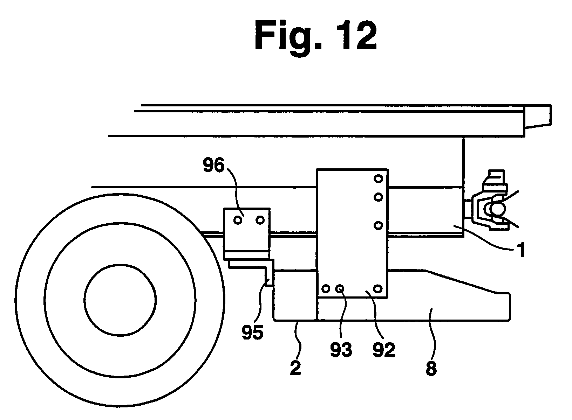

Die Fig. 12 zeigt eine weitere zusätzliche Schraub- oder Schweißbefestigung des beabstandet zum Fahrgestellrahmen 1 gehaltenen Tragprofils 2 auf der dem Träger 8 abgewandten Seite zwei um 90° zueinander verdreht angeordnete Winkelelemente 95 und 96.

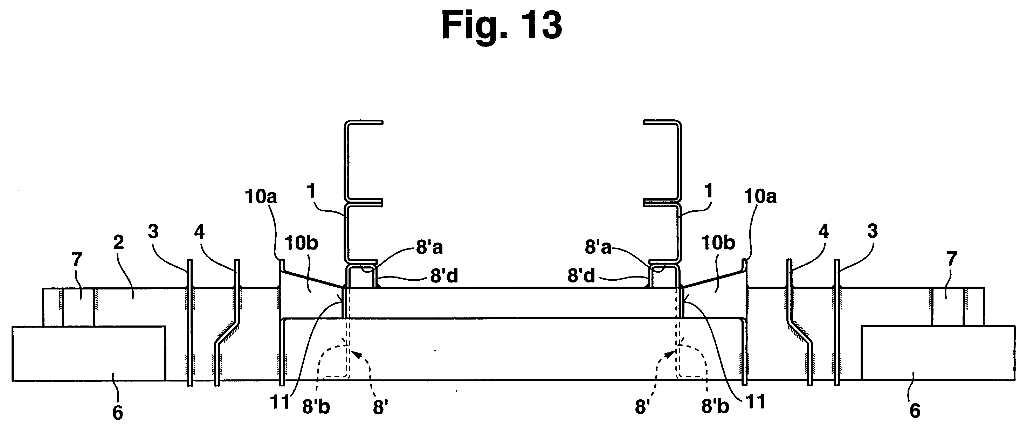

Fig. 13 zeigt eine weitere Ausführungsform, bei der das Tragprofil 2 beabstandet von dem Fahrgestellrahmen 1 gehalten ist. Der Z-förmige Träger 8' nach Fig. 19 unterscheidet sich von dem Träger 8 nach Fig. 2 dadurch, daß der Träger 8' über das Tragprofil 2 übersteht. Der obere Flansch 8'a ist zum Tragprofil z.B. 40 - 50 mm beabstandet und ist zum Tragprofil 2 über einen Schenkel 8'd abgewinkelt, welcher auf dem Tragprofil 2 aufsteht. Der Träger 8' steht 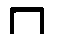 -förmig über das Tragprofil 2 über und ist mit dessen Oberseite verschweißt. Durch diese 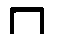 -förmige Ausbildung des Trägers 8' wird das Tragprofil 2 torsionsversteift, so daß es nicht an einem Rahmen, z.B. dem Fahrgestelltrahmen 1 anzuliegen braucht.

## Patentansprüche

1. Vorrichtung zur Befestigung eines eine Hubladebühne tragenden Tragprofils (2) an einem Fahrgestellrahmen (1) im hinteren Bereich eines Fahrzeuges, wobei das Tragprofil (2) mindestens zwei Lagerstellen (3, 4, 10, 10') für die Hubladebühne trägt und an dem Fahrgestellrahmen (1) gehalten ist,
dadurch gekennzeichnet,
daß mindestens zwei am Tragprofil (2) befestigte und nach hinten stehende Träger (8; 8'), vorzugsweise Unterfahrschutzträger, als tragende Bauteile ausgebildet und am Fahrgestellrahmen (1) gehalten sind und daß für jeden Träger (8; 8') mindestens ein Verbindungsarm (10; 10') vorgesehen ist, der einerseits am Tragprofil (2) nahe den Lagerstellen (3, 4, 10, 10') für die Hubladebühne und andererseits am Träger (8, 8') kraftschlüssig befestigt ist.

2. Befestigungsvorrichtung nach Anspruch 1, dadurch gekennzeichnet, daß jeder Träger (8; 8') als Versteifungsprofil, vorzugsweise als ein Z-Profil, ausgebildet ist.

3. Befestigüngsvorrichtung nach einem der vorhergehenden Ansprüche, dadurch gekennzeichnet, daß sich jeder Verbindungsarm (10; 10') vom Tragprofil (2) zunächst parallel zum Träger (8; 8') erstreckt und dann zum Träger (8; 8') hin abgewinkelt ist.

4. Vorrichtung nach einem der vorhergehenden Ansprüche, dadurch gekennzeichnet, daß jeder Träger (8; 8') einen oberen Flansch (8a; 8'a) aufweist, der an einem waagerechten unteren Flansch (1a) des Fahrgestellrahmens (1) anliegt.

5. Befestigungsvorrichtung nach Anspruch 4, dadurch gekennzeichnet, daß der obere Flansch (8'a) des Trägers (8') über das Tragprofil (2) 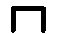 -förmig übersteht und mit seinem einen Schenkel (8'd) auf dem Tragprofil (2) aufsteht und daß der 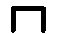 -förmig überstehende Träger (8') an das Tragprofil (2) angeschweißt ist.

6. Befestigungsvorrichtung nach Anspruch 5, dadurch gekennzeichnet, daß jeweils eine Halteplatte (50) mit der insbesondere senkrechten Außenseite des Fahrgestellrahmens (1) und mit der insbesondere senkrechten Außenseite des Trägers (8; 8') insbesondere waagerecht verschraubt ist.

7. Befestigungsvorrichtung nach einem der Ansprüche 1 bis 3, dadurch gekennzeichnet, daß der Träger (8; 8') an einem Fahrgestellrahmen (70) mit Doppelhutprofil (70a, 70b) über einen Befestigungswinkel (71) befestigt ist.

8. Befestigungsvorrichtung nach einem der Ansprüche 1 bis 3, dadurch gekennzeichnet, daß das Tragprofil (2) im Bereich der Lagerstellen (3, 4, 10, 10') torsionsversteift ist und daß das Tragprofil (2) und jeder Träger (8; 8') beabstandet zum Fahrgestellrahmen (1) an diesem befestigt sind.

9. Befestigungsvorrichtung nach Anspruch 8, dadurch gekennzeichnet, daß das Tragprofil (2) als zum Träger (8) hin offenes, erstes U-förmiges Profil (20) gebildet ist, das außen seitlich der beiden insbesondere senkrechten Stege (8b) der Träger (8) durch jeweils ein zweites U-förmiges Profil (21) zu einem geschlossenen Profil ergänzt ist, daß der Steg (8b) des Trägers (8) sich formschlüssig in das erste U-förmige Profil (20) bis an dessen i.w. senkrechte Innenfläche (20a) erstreckt und an das erste U-Profil (20) und das zweite U-Profil (21) angeschweißt ist.

10. Befestigungsvorrichtung nach einem der Ansprüche 8 oder 9, dadurch gekennzeichnet, daß jeweils eine Halteplatte (92) mit der insbesondere senkrechten Außenseite des Fahrgestellrahmens (1) und mit der insbesondere senkrechten Außenseite des Trägers (8; 8'), insbesondere waagerecht, verschraubt ist.

11. Befestigungsvorrichtung nach einem der vorhergehenden Ansprüche, dadurch gekennzeichnet, daß die am Fahrgestellrahmen (1), an einem Zwischenrahmen oder an der Halteplatte (92) anliegende Fläche des Tragprofils (2) durch Anschlagklötze (30) vergrößert ist.

12. Befestigungsvorrichtung nach einem der vorhergehenden Ansprüche, dadurch gekennzeichnet, daß das beabstandet zum Fahrgestellrahmen (1) gehaltene Tragprofil (2) auf der den Trägern (8; 8') abgewandten Seite über mindestens ein Winkelelement (94; 95, 96) am Fahrgestellrahmen (1) befestigt ist.
